# EUROPEAN PATENT SPECIFICATION

(11) **EP 1 655 609 B1**
(45) Date of publication and mention of the grant of the patent: **18.09.2013**
(21) Application number: 05077316.7
(22) Date of filing: 11.10.2005
(51) Int. Cl.: G01N 35/04, B01L 9/06

(54) **Test tube stand with a movable section for shaking the sample.**
Röhrchenständer mit einem beweglichen Teil zum Schütteln der Probe
Ensemble support d'eprouvettes comprenant une partie mouvant pour agiter d'échantillon

(30) Priority: 04.11.2004 EP 04078041
(43) Date of publication of application: 10.05.2006
(73) Proprietor: F.Hoffmann-La Roche AG, 4070 Basel (CH); Roche Diagnostics GmbH, 68305 Mannheim (DE)
(72) Inventor: Meyer, Thomas, 6330 Cham (CH); Schlaubitz, Thomas, 6045 Meggen (CH); Schorno, Reto, 6043 Adligenswil (CH); Müller, Siegfried, 6344 Meierskappel (CH)
(74) Representative: Herren, Barbara

(56) References cited:
- WO-A-01/28680
- WO-A-98/57739
- US-A- 5 632 388
- US-A- 5 665 309

## Description

The invention concerns a rack for holding containers containing liquids, in particular liquids used in clinical chemistry analyzers.

The invention further concerns an automatic analyzer for analyzing biological samples.

In automatic clinical chemistry analyzers racks are used for holding containers of liquids required for performing analysis of samples to be analyzed. Some of those liquids are e.g. solutions containing magnetic particles which should be uniformly distributed in the solution; such liquids require agitation during predetermined time intervals, whereas other required liquids require no agitation at all.

WO-A-98/57739 describes a reaction vessel holder comprising a fixed piece and a plurality of coupling elements fixed to the fixed piece and connected with openings of the fixed piece. The upper ends of the reaction vessels are connected with those coupling elements. The coupling elements and the openings of the fixed piece allow insertion of a needle, spoon or gripper into each reaction vessel. A portion of each coupling element is flexible, so that the lower end of the reaction vessel connected with the coupling element can be shaken by a shaking device without moving the fixed piece.

In prior art apparatuses it has therefore been necessary to have additional racks for containers which contain liquids that require agitation and agitating means connectable to such racks or to selectively transport such containers to a station for agitating liquid containers and thereby the liquids contained therein. A disadvantage of both approaches is that they increase the complexity and the manufacturing cost of automatic clinical chemistry analyzers. It is therefore desirable to have racks and analyzers which do not have this disadvantage.

A first aim of the invention is therefore to provide a rack which makes it possible to eliminate the above mentioned disadvantage.

A second aim of the invention is to provide an analyzer which makes it possible to eliminate the above mentioned disadvantage.

According to a first aspect of the invention the above mentioned first aim is achieved with a rack having the features defined by claim 1.

According to the intended use of the rack defined by claim 1, a container containing a liquid which has to be agitated is placed on a movable part of the rack which is adapted to be shaken by means of a shaker mechanism.

According to a second aspect of the invention the above mentioned second aim is achieved with an analyzer having the features defined by claim 4.

There is also a need for an analyzer having a low cost shaker device which is suitable for agitating liquids e.g. reagents contained in reagent containers located in a rack used in automatic clinical chemistry analyzers. An example of such liquid reagents are those containing magnetic particles which should be agitated in order that the magnetic particles are homogeneously distributed in the liquid.

A third aim of the invention is therefore to provide an analyzer having a low cost shaker device which is useful for the purpose just mentioned.

Preferred embodiments are defined by subclaims attached to this specification.

The subject invention will now be described in terms of its preferred embodiments with reference to the accompanying drawings. These embodiments are set forth to aid the understanding of the invention, but are not to be construed as limiting.
Fig. 1 shows a perspective view of a rack 11 according to the invention
Fig. 2 shows an exploded view of rack 11 shown by Fig. 1, removable part 21 of rack 11 and a casing 16 containing several containers 15 which each contain a liquid to be agitated.
Fig. 3 shows a perspective view of a part of an analyzer according to the invention.
Fig. 4 shows a perspective view of a first embodiment of a shaker device 31 which is part of the analyzer shown by Fig. 3.
Fig. 5 shows a partial cross-sectional view of means for removably coupling movable part 21 of rack 11 with a carriage 34 of a shaker device 31 by means of a leaf spring 35.
Fig. 6 shows a partial cross-sectional view of a movable part 21 of rack 11 coupled with carriage 34 of shaker device 31 by means of leaf spring 35.
Fig. 7 shows curves representing the variation with time of the components of motion of carriage 34 in three orthogonal directions X, Y, Z and of an angular component ϕ corresponding to the oscillation of the carrier around an axis of oscillation.
Fig. 8 shows a path M of a point of casing 16 when it is moved by shaker device 31 shown by Fig. 4.
Fig. 9 shows a perspective partial view of a second embodiment of an analyzer according to the invention with a second embodiment of a shaker device.
Fig. 10 shows an enlarged view of a portion of Fig. 9.
Fig. 11 shows a perspective partial view of a third embodiment of an analyzer according to the invention with a third embodiment of a shaker device.
Fig. 12 shows an enlarged view of a portion of Fig. 11.
Fig. 13 shows a perspective partial view of a fourth embodiment of an analyzer according to the invention.
Fig. 14 shows an enlarged view of a portion of Fig. 13.
Fig. 15 shows a perspective partial view of a fifth embodiment of an analyzer according to the invention with a fourth embodiment of a shaker device.
Fig. 16 is a perspective view of a part of the shaker embodiment shown by Fig. 15.
Fig. 17 is a perspective view of the flexible element 101 shown in Fig. 15.
Fig. 18 shows a perspective partial view of a variant of the embodiment of a shaker device shown by Fig. 15.

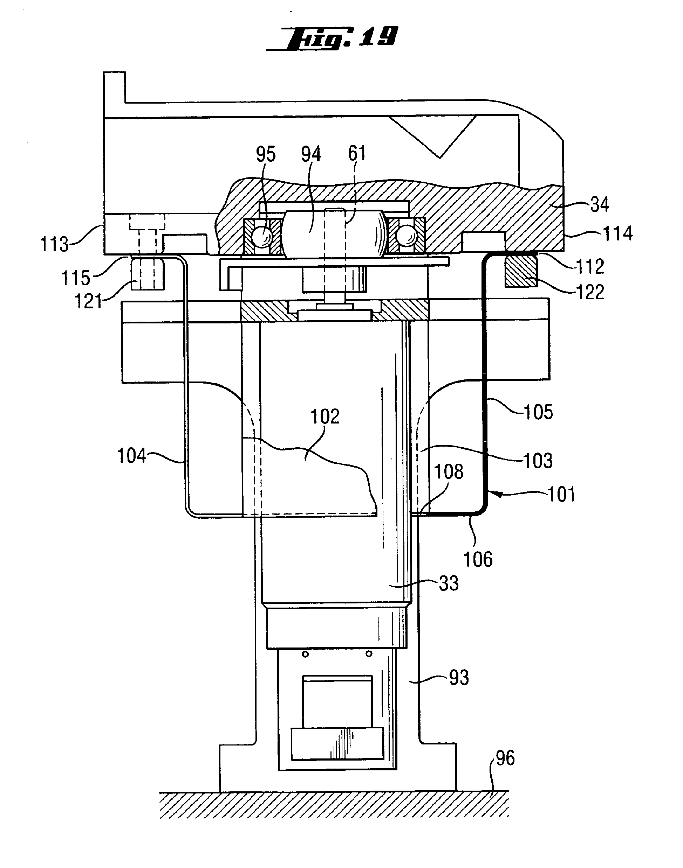

Fig. 19 shows a partial view of the connection between carriage 34 and motor 33.
Fig. 20 illustrates the use of a shaker device of the type shown by Figure 15 in an analyzer of the type described with reference to Figures 1-8.
Fig. 21 shows a variant of the embodiment shown by Fig. 20.
Fig. 22 illustrates the use of a shaker device of the type shown by Figure 15 in an analyzer of the type shown by Fig. 11.

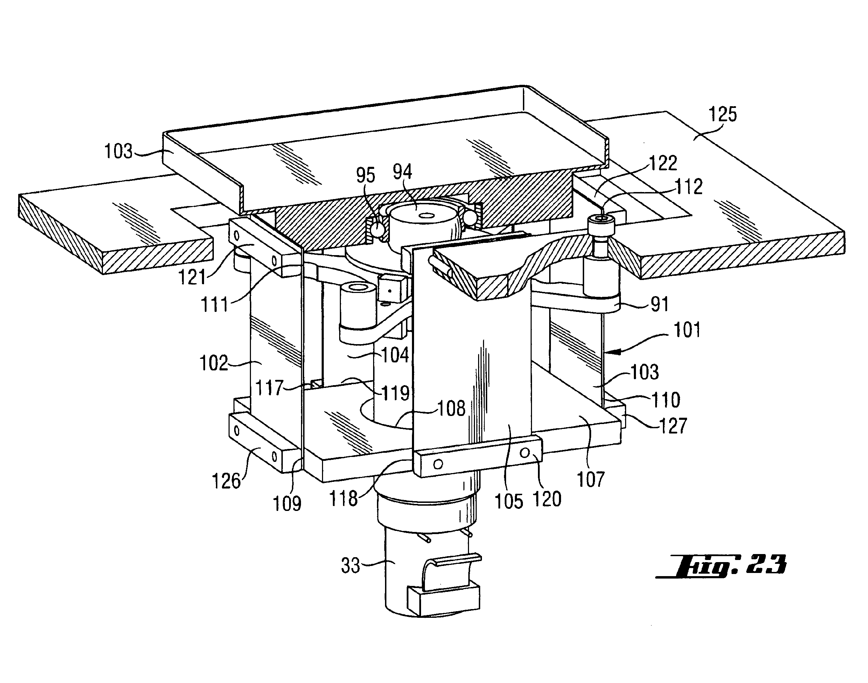

Fig. 23 shows a variant of the embodiment shown by Fig. 22.

### REFERENCE NUMERALS IN DRAWINGS

- 11: rack
- 11a: rack
- 12: frame
- 13: section of frame 12
- 14: section of frame 12
- 15: liquid container
- 16: liquid container carrier (e.g. a kit of reagents)
- 21: movable part of rack 11
- 28: encoder
- 29: axis of rotation of motor shaft 71
- 31: shaker device
- 32: disk driven by motor 33
- 33: step motor
- 34: carriage of shaker device 31
- 35: leaf spring
- 36: eccentric pin
- 37: cylindrical joint combined with a revolute joint
- 38: connection piece
- 39: axis of oscillation and deviation
- 40: joint
- 41: pin
- 42: pin
- 43: pin
- 51: opening of removable part 21
- 52: opening of removable part 21
- 53: slide bearing

- 61: motor shaft
- 61a: eccentric pin
- 61b: axis of eccentric pin
- 62: slide bearing
- 63: carriage of shaker device
- 64: guiding shaft
- 65: ball and socket joint
- 66: electro-optical detector
- 67: shaker device
- 68: support plate for the frame 12 of rack 11
- 69: support element
- 69a: support element
- 70: shaker device
- 71: motor shaft
- 71a: eccentric pin
- 71b: axis of eccentric pin
- 72: slide bearing
- 73: motor holder
- 74: guiding shaft
- 75: guiding shaft
- 76: machine frame
- 77: guiding support member

- 78: ball and socket joint
- 79: movable support plate for the frame 12 of rack 11a
- 80: shaker device
- 81: motor shaft
- 81a: eccentric pin
- 81b: axis of eccentric pin
- 82: slide bearing
- 83: motor holder
- 84: guiding shaft
- 85: guiding shaft
- 86: machine frame
- 87: arm
- 88: ball and socket joint
- 89: movable support plate
- 91: cross-shaped support plate
- 92: support plate
- 93: support plate
- 94: eccentric ball
- 95: roller bearing
- 96: basis plate
- 101: spring element
- 102: flap
- 103: flap
- 104: flap
- 105: flap
- 106: flat central part
- 107: central plate
- 108: opening
- 109: end part of flap
- 110: end part of flap
- 111: end part of flap
- 112: end part of flap
- 113: end part of carriage 34
- 114: end part of carriage 34
- 115: end part of flap
- 116: end part of flap end part of carriage 34
- 117: end part
- 118: end part
- 119: connecting piece
- 120: connecting piece
- 121: connecting piece
- 122: connecting piece
- 123: connecting piece
- 124: connecting piece
- 125: intermediate support plate
- 126: connecting piece
- 127: connecting piece

- 131: support element
- 132: support element
- 133: tray
- e: eccentricity
- φ: deviation angle
- S: arrow for longitudinal movement
- R: arrow for rotation

### DETAILED DESCRIPTION OF PREFERRED EMBODIMENTS

An automatic clinical chemistry analyzer comprises in general means for handling liquids like biological samples or reagents and means for analyzing sample-reagent-mixtures. A reagent can be e.g. a liquid containing magnetic particles.

In the following description only those parts of an automatic clinical chemistry analyzer are described which are necessary to describe how a rack containing liquid containers or a movable part of such a rack is agitated by means of a shaker device.

### EXAMPLES

### EXAMPLE 1 - EXAMPLE OF A RACK ACCORDING TO THE INVENTION

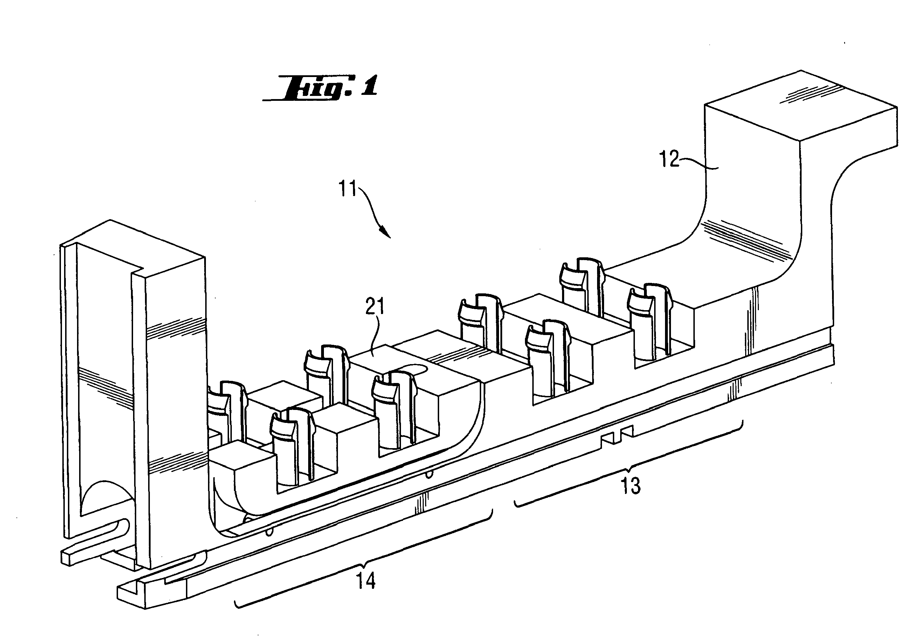

Fig. 1 shows a rack 11 according to the invention. Rack 11 has a frame 12 and a movable part 21. Frame 12 has at least one section 13 for holding a first liquid containing component (not shown) which does not have to be agitated and at least one section 14 for holding a second liquid containing component (not shown) which has to be agitated. The movable part 21 of the rack 11 is located in a section 14. The shape and size of section 14 allows movement of movable part 21 within predetermined limits.

Rack 11 may be made of any suitable material, for instance a polycarbonate (PC).

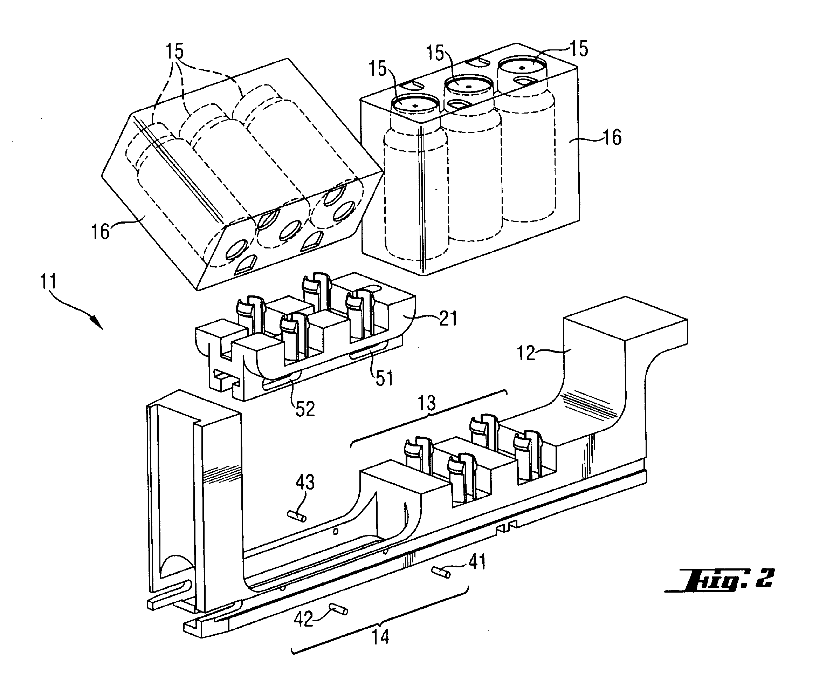

The first and the second liquid containing components may be a single liquid container or a component comprising a casing 16 which contains one or more liquid containers 15 (see Fig. 2). A component of the latter type is described in European Patent Application EP 0564970 A2.

Fig. 2 shows a rack 11 having a section 14 that holds a liquid containing a component of the type described in European Patent Application EP 0564970 A2. Such a component comprises e.g. a casing 16 wherein one or more containers 15 are lodged. Each of the containers 15 contains a liquid to be agitated.

### EXAMPLE 2 - EXAMPLE OF A FIRST EMBODIMENT OF ANALYZER ACCORDING TO THE INVENTION

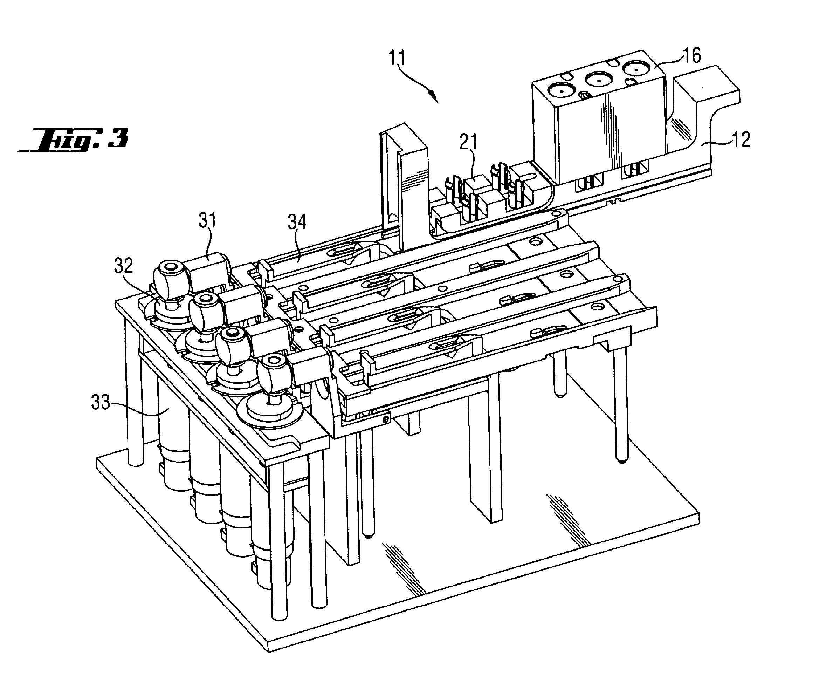

Fig. 3 shows a perspective view of a part of an analyzer according to the invention which includes a rack of the type described above with reference to Figures 1 and 2.

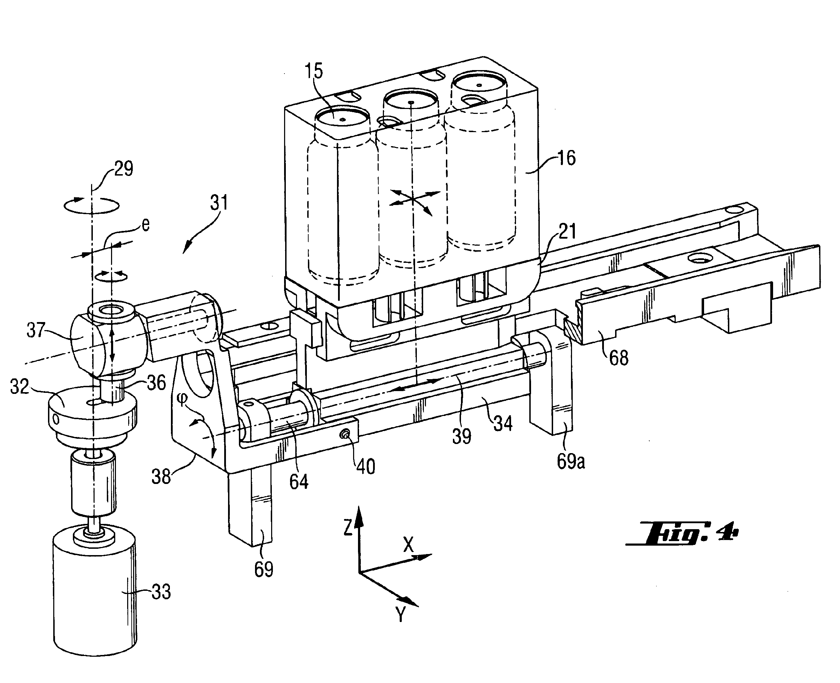

A first embodiment of a shaker device which is part of this analyzer is described hereinafter with reference to Figures 4 to 8.

As shown by Fig. 3, the analyzer may comprise several electromechanical shaker devices 31 each of which is adapted for being connected to a removable part 21 of rack 11.

Among the parts of shaker 31 represented in Fig. 3 are a carriage 34 and a disk 32 which carries an eccentric pin 36 and which is driven by a motor 33. In certain embodiments, motor 33 is a step motor.

Fig 4 shows a perspective view of shaker device 31. In Fig. 4 a carriage 34 which is part of shaker mechanism 31 is removably coupled to movable part 21 of rack 11.Carriage 34 is connected with a connection piece 38 by means of a joint 40. Connection piece 38 is rotatably connected to a cylindrical joint combined with a revolute joint 37 which is in turn connected with eccentric pin 36. The lower part of carriage 34 includes a slide bearing 53 which allows carriage 34 to slide back and forth along the length axis 39 of a guiding shaft 64 and also to oscillate back and forth around axis 39. Guiding shaft 64 has a fixed position and is parallel to the X-axis. Guiding shaft 64 is supported by support elements 69 and 69a respectively.

Fig. 4 also shows a support plate 68 for the frame 12 of rack 11.

As shown in Fig. 4, the eccentricity e is the distance that separates the axis of rotation 29 of motor 33 and the length axis of pin 36 from each other.

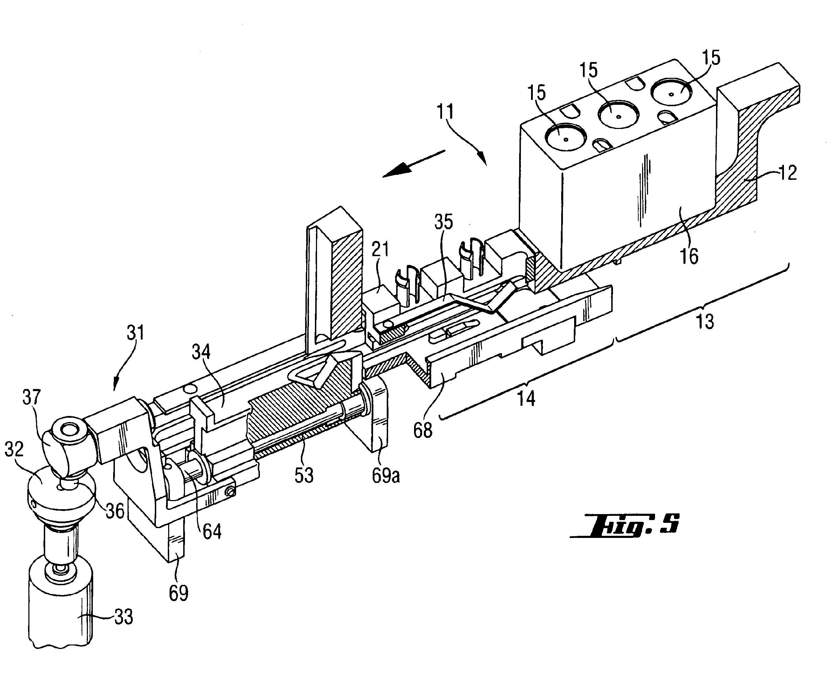

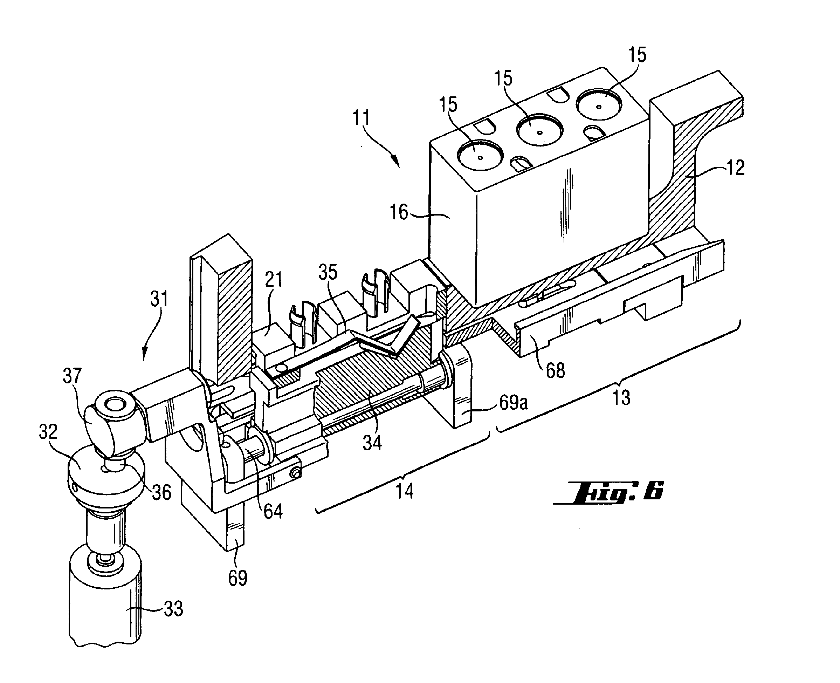

Fig. 5 shows a partial cross-sectional view of means for removably coupling movable part 21 of rack 11 with a carriage 34 of a shaker device 31 by means of a leaf spring 35. As shown by Figures 5 and 6, one end of leaf spring 35 is mechanically connected with movable part 21. Fig. 5 shows a rack 11 in a position at which movable part 21 is not engaged with carriage 34 by means of a leaf spring 35. In Fig. 5, a casing 16 containing liquid containers 15 which do not have to be agitated is mounted on section 13 of rack 11. When frame 12 of rack 11 is in the position represented in Fig. 5 with respect to carriage 34 of shaker device 31, movable part 21 is loosely connected with frame 12. This loose connection may be achieved by means of pins 41, 42, 43 which cooperate with corresponding openings 51, 52 of removable part 21 shown in Fig. 2. Pins 41, 42, 43 are inserted in suitable openings of frame 12.

Fig. 6 shows a partial cross-sectional view of a movable part 21 of rack 11 coupled with carriage 34 of shaker device 31 by means of leaf spring 35. When frame 12 of rack 11 is in the position represented in Fig. 6 with respect to carriage 34 of shaker device 31, movable part 21 remains connected with frame 12.

As can be appreciated from Fig. 4, when disk 32 and thereby eccentric pin 36 are rotated by actuation of motor 33, pin 36 and joint 37 cause a movement of connection piece 38 and thereby of carriage 34, movable part 21 and liquid containers 15 in three orthogonal directions X, Y, Z within predetermined limits. Directions X, Y, Z are represented in Fig. 4. This motion is the result of the combination of two movements of connection piece 38: an oscillation of an angle ϕ around axis 39 and a back and forth motion in X direction.

The mechanical components of shaker device 31 may be made of any suitable material, such us, for example, aluminum or of steel.

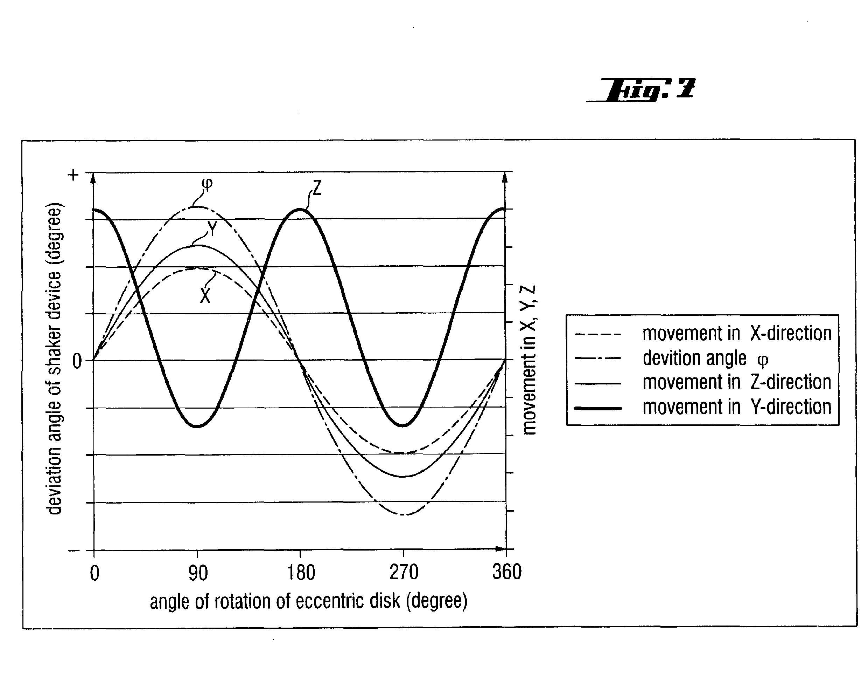

Fig. 7 shows curves representing the variation with time of the components of motion of carriage 34 in three orthogonal directions X, Y, Z and of an angular component ϕ corresponding to the oscillation of carriage 34 around axis 39.

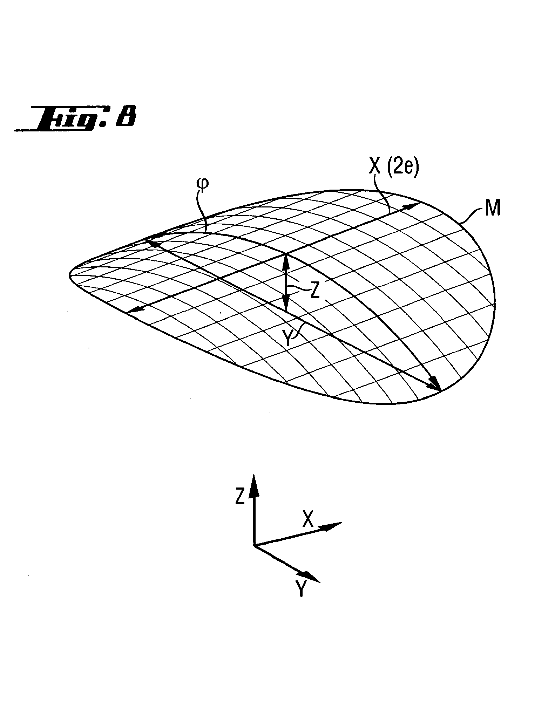

Fig. 8 shows a three-dimensional path M of motion of a point of casing 16 when it is moved by shaker device 31 shown by Fig. 4.

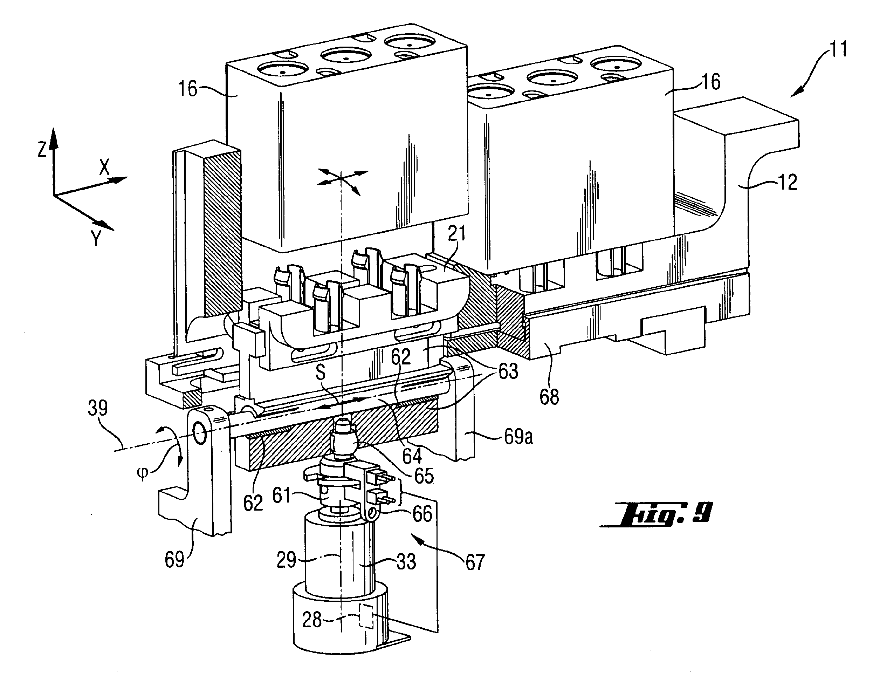

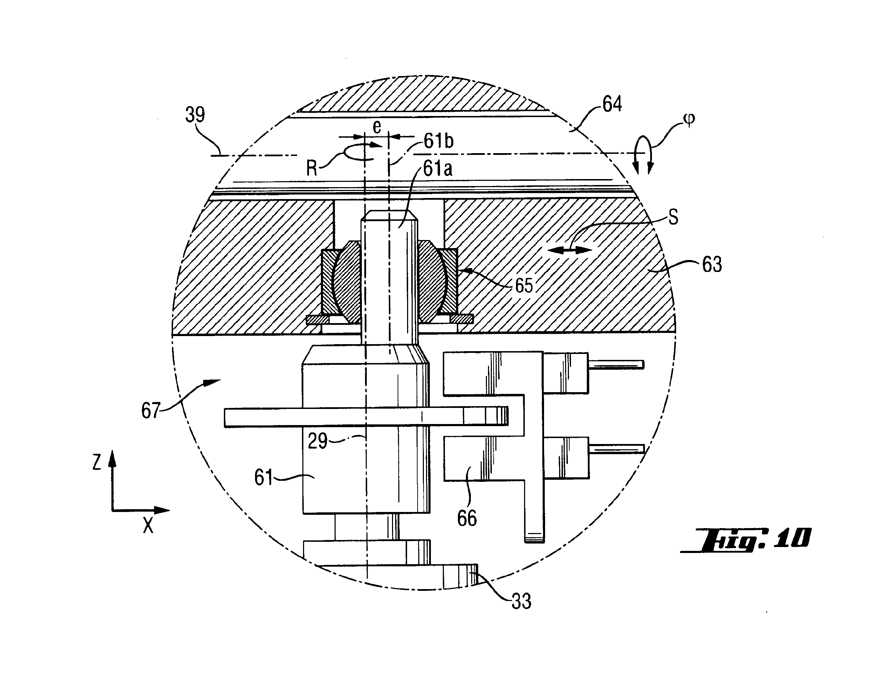

An encoder 28 (shown in Fig. 9) is connected with motor 33 and is arranged in the housing of motor 33. The angular position of motor 33 is controlled by means of encoder 28 which for this purpose receives signals from an electro-optical position detector 66 described hereinafter with reference to Figures 9 and 10. Control of the angular position of motor 33 by means of encoder 28 and detector 66 makes it possible to position liquid container carrier 16 and thereby liquid container 16 in a reproducible way, at a predetermined position, e.g. at the end of a shaking operation of shaker device 31.

### EXAMPLE 3 - EXAMPLE OF A SECOND EMBODIMENT OF AN ANALYZER ACCORDING TO THE INVENTION

The structure of this second analyzer embodiment is similar to the structure of the first embodiment described above with reference to Figures 1-8, but this second analyzer embodiment comprises a second embodiment of a shaker device which is described hereinafter with reference to Figures 9 and 10.

Fig. 9 shows a perspective view of a shaker device 67 which is part of an analyzer according to the invention and which serves for moving the movable part 21 of rack 11 and thereby casing 16 in the same way as achieved with shaker 31 and thereby effect the motions represented in Figures 7 and 8.

Shaker device has a carriage 63 which has the same or similar structure and function as carriage 34 described above with reference to Figures 4-6. The lower part of carriage 63 includes a slide bearing 62 which allows carriage 34 to slide back and forth along the length axis 39 of a guiding shaft 64 and also to oscillate back and forth around axis 39. Guiding shaft 64 has a fixed position and is parallel to the X-axis. Guiding shaft 64 is supported by support elements 69 and 69a respectively.

Shaker device 67 is shown in detail in Fig. 10. Shaker device 67 differs from shaker device 31 represented in Fig. 4 in that it comprises a pin 61a inserted in a ball and socket joint 65 which as shown in Fig. 9 is directly connected to carriage 63 of shaker device 67 and not by means of a joint 37 and a connection piece 38 as is the case when shaker device 31 shown in Fig. 4 is used. Fig. 9 also shows support plate 68 for the frame 12 of rack 11. Pin 61a is driven by a shaft 61 of a step motor 33.

Fig. 10 also shows the eccentricity e of pin 61a, i.e. the distance e between the length symmetry axis 61 b of pin 61a and the rotation axis 29 of shaft 61 of motor 33.

The lower part of carriage 63 includes a slide bearing 62 which allows carriage 63 to slide back and forth along the length axis 39 of a guiding shaft 64 and also to oscillate back and forth around axis 39. Guiding shaft 64 has a fixed position and is parallel to the X-axis. Guiding shaft 64 is supported by support elements 69 and 69a respectively.

When motor 33 is actuated, a motion transmitted to carriage 63 by pin 61a and joint 65 moves carriage 63 back and forth along the length axis 39 of guiding shaft 64 and also oscillates carriage 63 back and forth around axis 39.

Figures 9 and 10 also show an electro-optical position detector 66 which accurately detects the angular position of motor shaft 61. Detector 66 provides signals to an encoder 28 (shown in Fig. 9) which serves for accurately positioning motor shaft 61. Control of the angular position of motor shaft 61 by means of encoder 28 and detector 66 makes it possible to position liquid container carrier 16 and thereby liquid container 16 in a reproducible way, at a predetermined position, e.g. at the end of a shaking operation of shaker device 67.

### EXAMPLE 4 - EXAMPLE OF A THIRD EMBODIMENT OF AN ANALYZER ACCORDING TO THE INVENTION

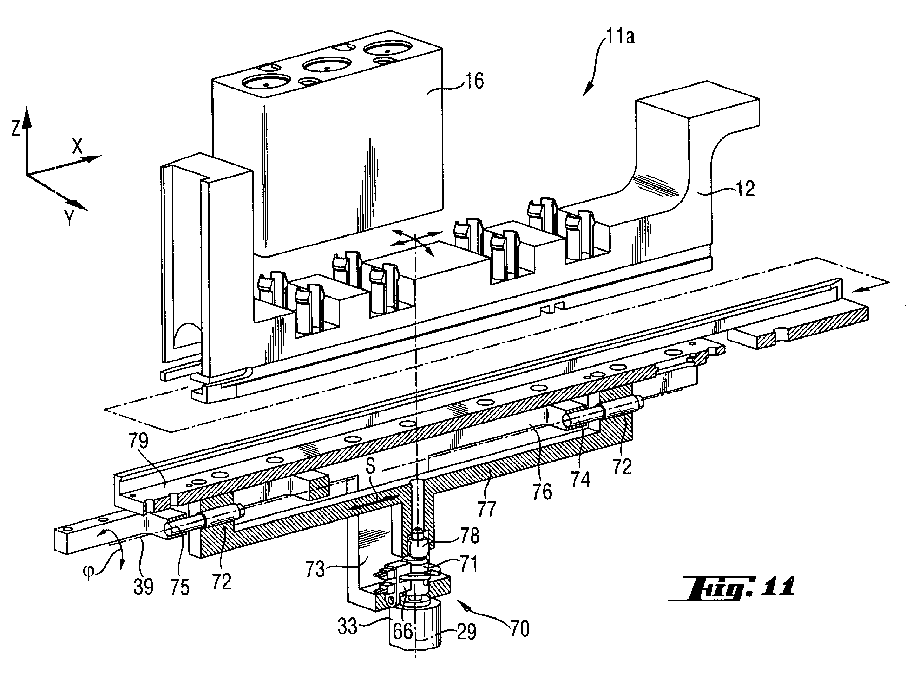

Fig. 11 shows a part of a third embodiment of an analyzer according to the invention. This embodiment differs from the above described first and second embodiments in that it does not use the type of rack described above with reference to Figures 1 and 2, but a rack 11a built as a single piece frame 12 having a shape adapted for receiving liquid containers 16.

As shown by Fig. 11 the third embodiment of the analyzer also comprises a shaker device 70 which has a similar structure as shaker device 67 in Fig. 9. Shaker device 70 comprises a movable support plate 79 adapted for receiving rack 11a. Rack 11a and movable plate 79 are adapted for being removably connectable with each other.

The lower part of movable plate 79 is formed as a guiding support member 77.

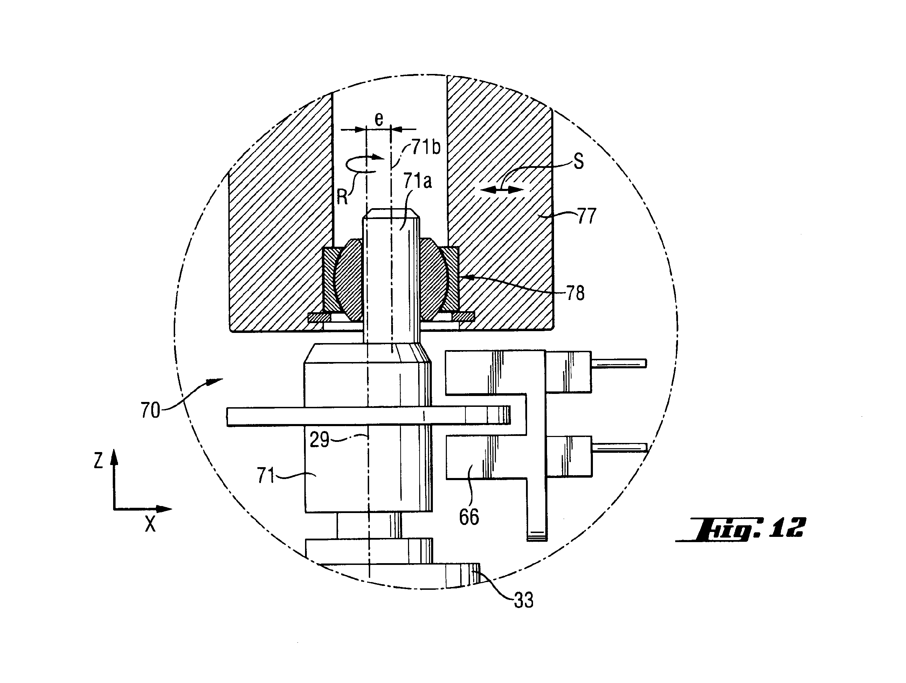

As shown by Fig. 12 shaker device 70 further comprises an eccentric pin 71a driven by a shaft 71 of a step motor 33.

Pin 71a is inserted in a ball and socket joint 78 which, as shown in Fig. 12, is directly connected to support member 77 of movable plate 79.

Fig. 12 also shows the eccentricity e of pin 71a, i.e. the distance e between the length symmetry axis 71b of pin 71a and the rotation axis 29 of shaft 71 of motor 33.

The lower part of guiding support member 77 includes a slide bearing 72 which allows support member 77 and thereby movable plate 79 to slide back and forth along the length axis 39 of a guiding shaft 75 and also to oscillate back and forth around axis 39. Guiding shaft 75 has a fixed position and is parallel to the X-axis.

When motor 33 is actuated, a motion transmitted to movable plate 79 by pin 71a and joint 78 moves movable plate 79 back and forth along the length axis 39 of guiding shaft 75 and also oscillates movable plate 79 back and forth around axis 39.

Shaker device 70 moves rack 11a and thereby casing 16 in the same way as achieved with shaker 31 in the embodiment described with reference to Figures 1-8. Casing 16 in Fig. 11 is thus moved by shaker device 70 as represented in Figures 7 and 8.

Figures 11 and 12 also show an electro-optical position detector 66 which accurately detects the angular position of motor shaft 71. Detector 66 provides signals to an encoder 28 (shown in Fig. 9) which serves for accurately positioning motor shaft 71. Control of the angular position of motor shaft 71 by means of encoder 28 and detector 66 makes it possible to position liquid container carrier 16 and thereby liquid container 16 in a reproducible way, at a predetermined position, e.g. at the end of a shaking operation of shaker device 70.

### EXAMPLE 5 - EXAMPLE OF A FOURTH EMBODIMENT OF AN ANALYZER ACCORDING TO THE INVENTION

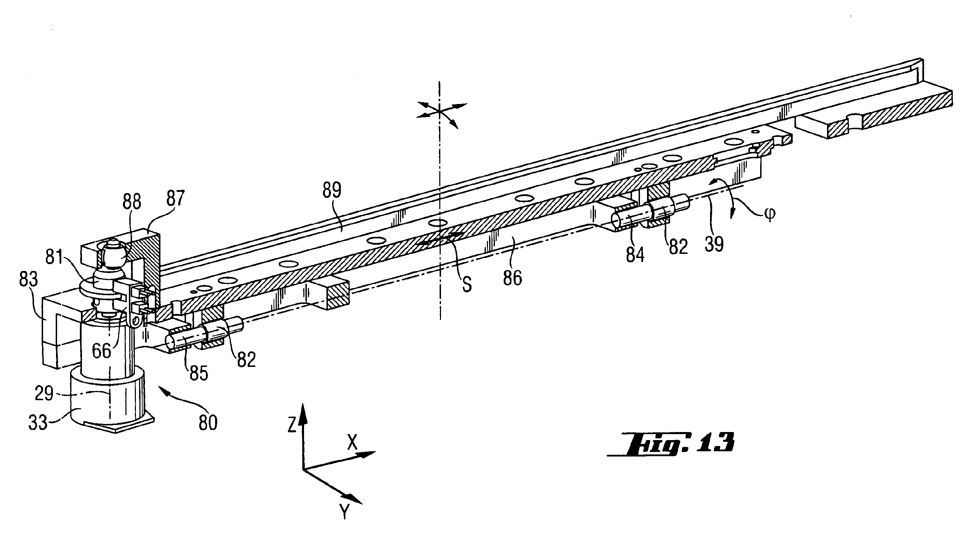

Fig. 13 shows a part of a fourth embodiment of an analyzer according to the invention. This fourth embodiment also uses a rack 11a of the type shown in Fig. 11 and comprises a movable support plate 89 similar to movable plate 79 of the third embodiment.

This fourth embodiment of an analyzer according to the invention differs from the above described third analyzer embodiment in that it comprises a shaker device 80 which is not connected to the lower and central part of the movable plate, but to one end thereof formed as a bar 87.

As shown by Fig. 13 shaker device 80 has a similar structure as shaker device 70 in Fig. 11.

Shaker device 80 comprises a movable support plate 89 adapted for receiving rack 11a. Rack 11a and movable plate 89 are adapted for being removably connectable with each other.

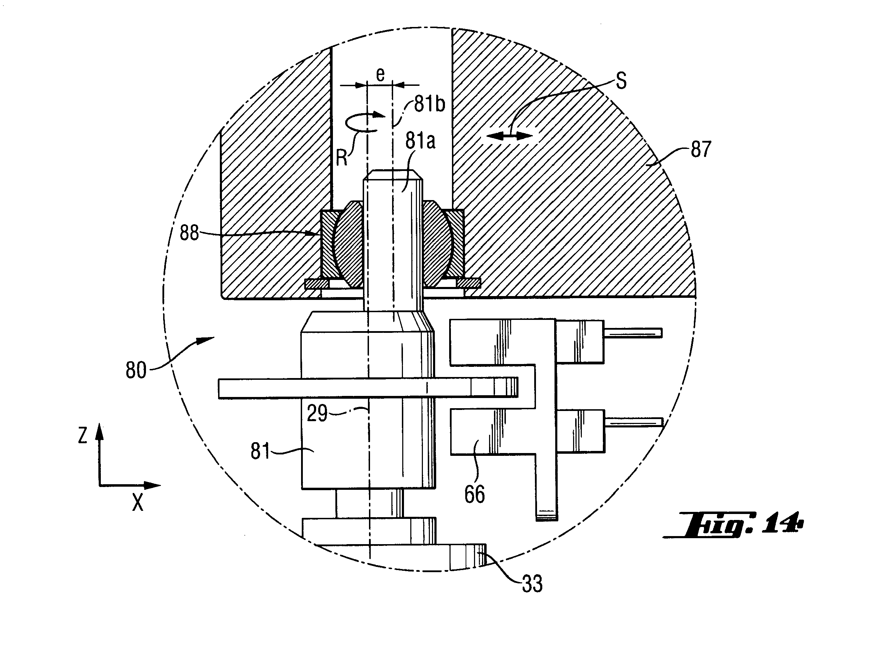

As shown by Fig. 14 shaker device 80 further comprises an eccentric pin 81a driven by a shaft 81 of a step motor 33.

Pin 81a is inserted in a ball and socket joint 88 which as shown in Fig. 14 is directly connected to bar 87 at one end of movable plate 89.

Fig. 14 also shows the eccentricity e of pin 81a, i.e. the distance e between the length symmetry axis 81b of pin 81a and the rotation axis 29 of shaft 81 of motor 33.

The lower part of movable plate 89 is formed as a guiding support member which includes slide bearings 82 which allow movable plate 89 to slide back and forth along the length axis 39 of guiding shafts 84 and 85 and also to oscillate back and forth around axis 39. Guiding shafts 84 and 85 have a fixed position and are parallel to the X-axis.

When motor 33 is actuated, motion transmitted to movable plate 89 by pin 81a and joint 88 moves movable plate 89 back and forth along the length axis 39 of guiding shafts 84 and 85 and also oscillates movable plate 89 back and forth around axis 39.

Shaker device 80 also moves rack 11a and thereby casing 16 in the same way as achieved with shaker 31 in the embodiment described with reference to Figures 1-8. Casing 16 in Fig. 11 is thus moved by shaker device 80 as represented in Figures 7 and 8.

Figures 13 and 14 also show an electro-optical position detector 66 which accurately detects the angular position of motor shaft 81. Detector 66 provides signals to an encoder 28 (shown in Fig. 9) which serves for accurately positioning motor shaft 81. Control of the angular position of motor shaft 81 by means of encoder 28 and detector 66 makes it possible to position liquid container carrier 16 and thereby liquid container 16 in a reproducible way, at a predetermined position, e.g. at the end of a shaking operation of shaker device 80.

### EXAMPLE 6 - EXAMPLE OF A FIFTH EMBODIMENT OF AN ANALYZER ACCORDING TO THE INVENTION

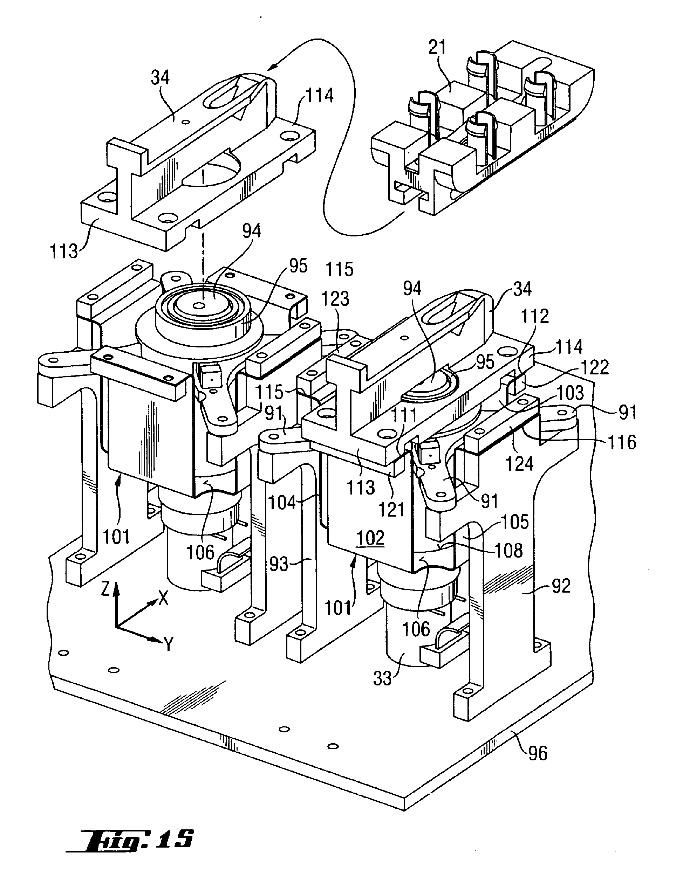

The structure of this fifth analyzer embodiment is similar to the structure of the first embodiment described above with reference to Figures 1-8, but this second analyzer embodiment comprises a second embodiment of a shaker device which is described hereinafter with reference to Figures 15 to 17.

Fig. 15 shows a perspective view of two separate shaker devices side by side. Each shaker device is mounted on a basis plate 96 of the analyzer and comprises a movable carriage 34 adapted for being removably connected to the movable part 21 of a rack 11 as described above with reference to Figures 1-6, rigid support plates 92 and 93 fixedly mounted on basis plate 96, and a cross-shaped support plate 91, on which is mounted the motor 33 of the shaker device. Support plates 92 and 93 are arranged on opposite sides of movable carriage 34.

As shown by Fig. 15, movable carriage 34 is connected to support plates 92, 93 by means of a flexible element 101.

The connection of movable carriage 34 to stationary rigid support plates 92, 93 by means of flexible element 101 allows limited displacements of movable carriage 34 in three directions X, Y, Z which are orthogonal to each other. The material and the dimensions of the central part 106 and the flaps 102-105 of flexible element 101 are so chosen that this element has sufficient flexibility to allow such displacements. In one particular embodiment, flexible element 101 is made of stainless spring band steel No. 1.4310 and has e.g. the following dimensions: Width = 35 mm, Length= 50 mm and Thickness= 0.2 mm.

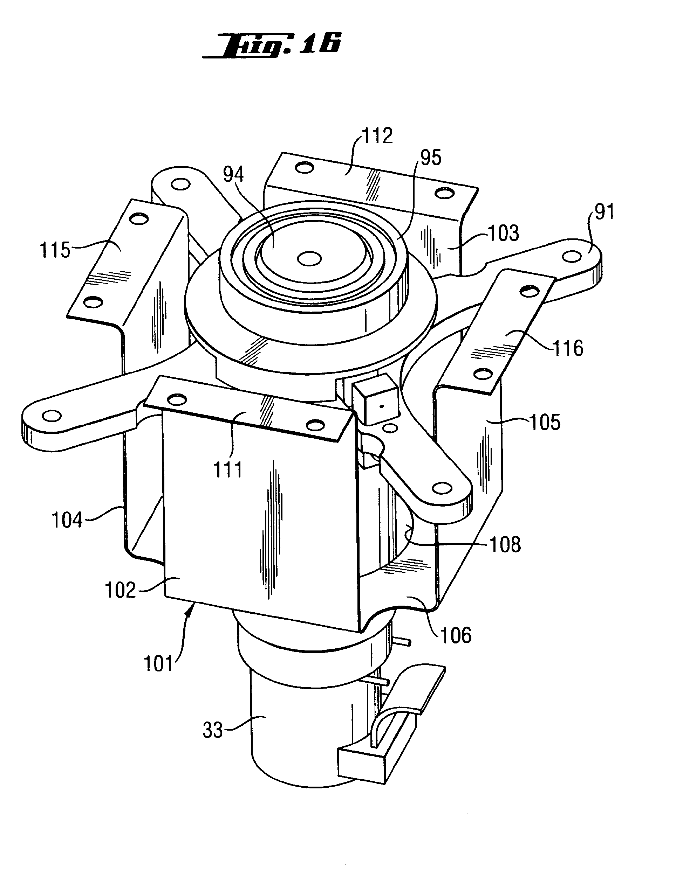

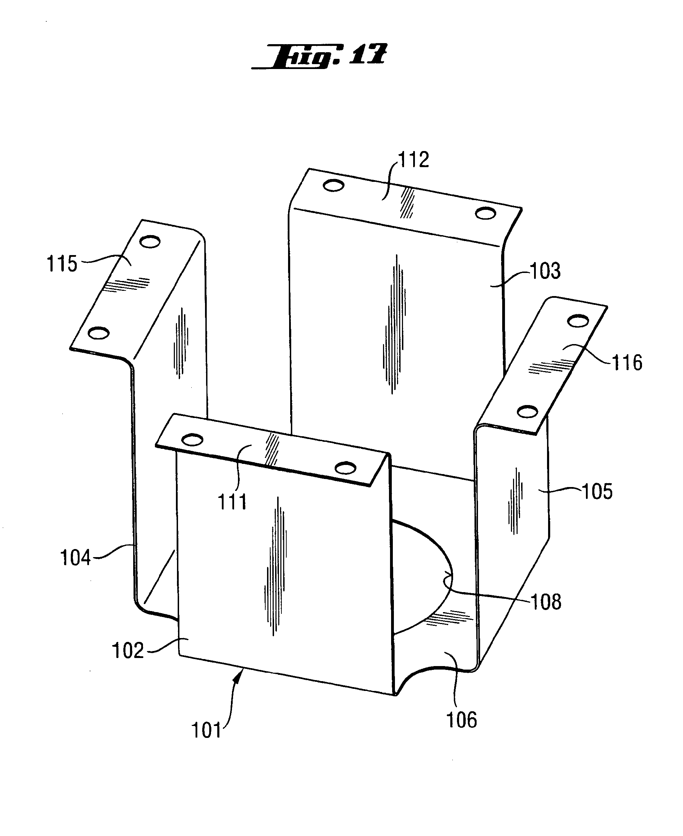

In one particular embodiment flexible element 101 is a single-piece element which, as shown by Figures 16 and 17, comprises a flat central part 106 which lies in a plane, a first pair of rectangular flaps 102, 103 parallel to each other, and a second pair of rectangular flaps 104, 105 parallel to each other. Flaps 104 and 105 extend along planes which are normal to flaps 102, 103.

As shown in Fig. 15, the shaft of motor 33 passes through an opening 108 of flexible element 101 and drives an eccentric ball 94 which cooperates with a roller bearing 95 and moves carriage 34.

Each of flaps 102, 103 extends from central part 106 along a plane normal to the plane defined by the surface of central part 106. Flaps 102 and 103 have end parts 111 and 112 respectively. End parts 111, 112 are connected to end parts 113 respectively 114 of said movable carriage 34. End parts 113 and 114 lie on opposite sides of movable carriage 34.

Each of flaps 104, 105 extend from central part 106 along a plane normal to the plane defined by the surface of central part 106. Flaps 104, 105 have end parts 115 and 116 respectively. End part 115 is connected to stationary support plate 93. End part 116 is connected to stationary support plate 92.

The embodiment just described offers the advantage of having less number of parts than the other shaker embodiments described above, and this reduces the manufacturing costs and makes the operation more reliable and less prone to failure due to mechanical problems.

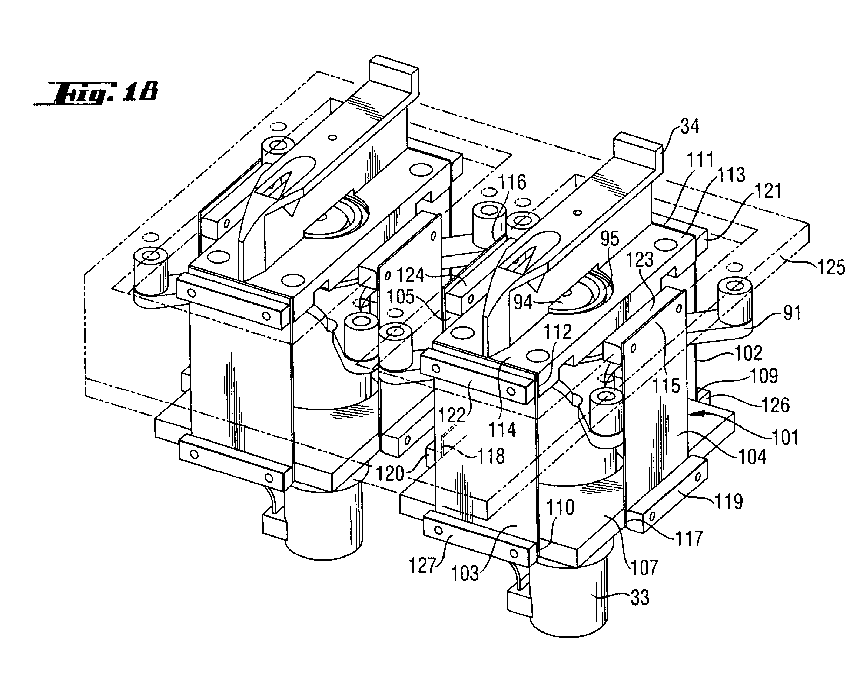

In another embodiment represented in Fig. 18, the shaker device is mounted on an intermediate support plate 125 of the analyzer instead of support plates 92 and 93, and flexible element 101 is not a single-piece element, but is a structure which comprises a central plate 107 lying in a plane, a first pair of individual rectangular flaps 102, 103 parallel to each other and a second pair of individual rectangular flaps 104, 105 parallel to each other. Flaps 104 and 105 extend along planes which are normal to flaps 102 and 103.

Each of flaps 102, 103 has a first end part 109, 110 connected to central plate 107 by connecting pieces 126, 127 and a second end part 111 respectively 112 which are connected to end parts 113 and 114 of movable carriage 34 by means of connecting pieces 121 respectively 122. End parts 113 and 114 lie on opposite sides of movable carriage 34. The first end parts of flaps 102 and 103 may be connected to plate 107 by connecting pieces similar to connecting pieces 121, 122.

Flap 104 has a first end part 117 connected by connecting piece 119 to central plate 107 and a second end part 115 opposite to the first end part and connected by a connecting piece 123 to intermediate support plate 125 of the analyzer at a place located on one side of said movable carriage 34, whereas flap 105 has a first end part 118 connected by a connecting piece 120 to central plate 107 and a second end part 116 opposite to the first end part and connected by connecting piece 124 to intermediate support plate 125 of the analyzer at a place located on the opposite side of movable carriage 34.

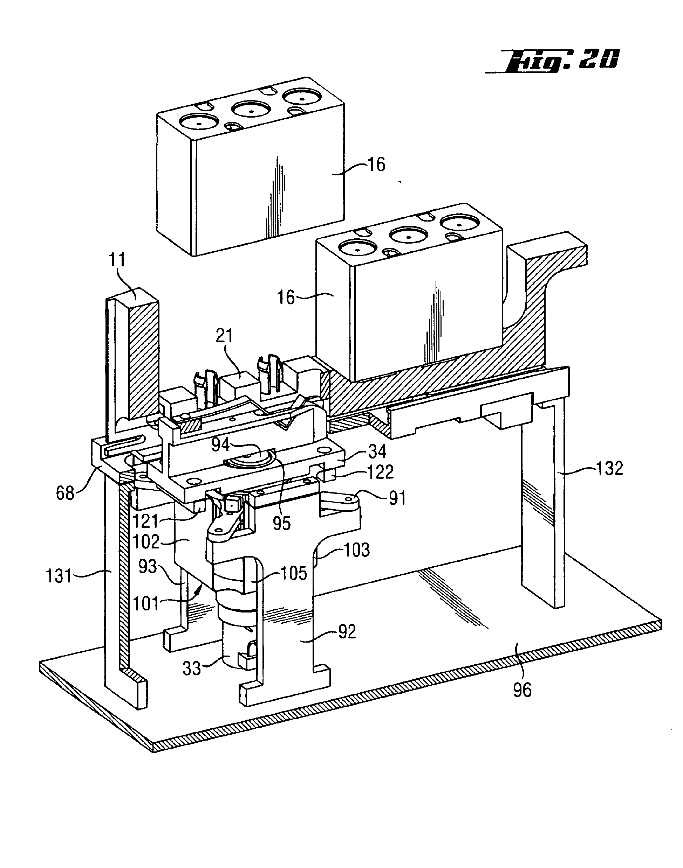

Fig. 20 illustrates the use of a shaker device of the type described above with reference to Figures 15-17 in an analyzer in which a casing 16 containing one or more reagent containers is positioned on the movable part 21 of a rack and this movable part is removably connected to the movable carriage 34 of the shaker device. Fig. 20 includes a partial view of a rack 11 of the type shown in Figures 1-6, a part of a support plate 68 and a part of support elements 131 and 132 which support plate 68. Support elements 131 and 132 are rigidly connected with basis plate 96.

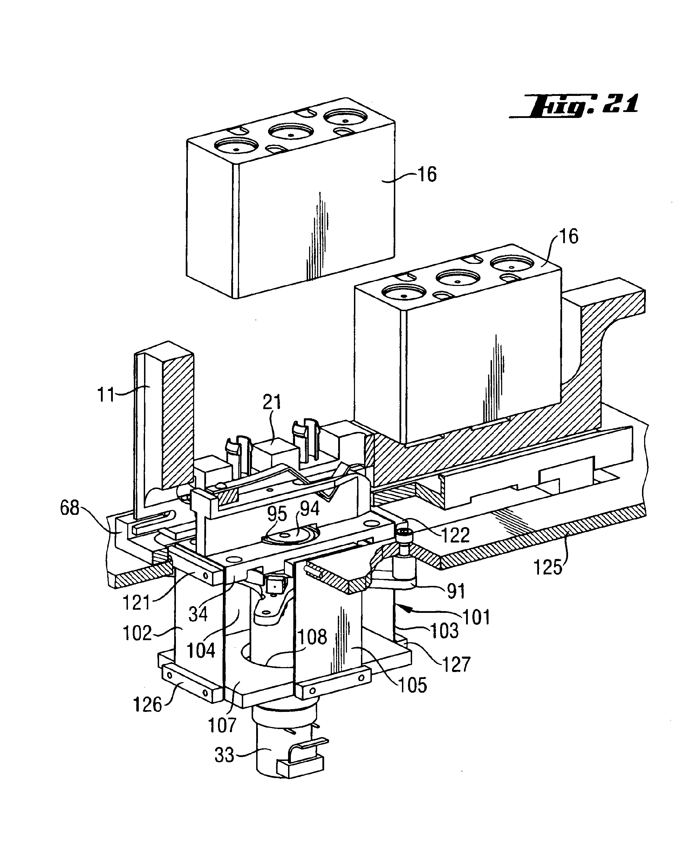

Figure 21 shows a partial perspective view of a variant of the embodiment shown by Fig. 20, wherein instead of a single-piece flexible element 101 a flexible structure of the type described above with reference to Fig. 18 is used.

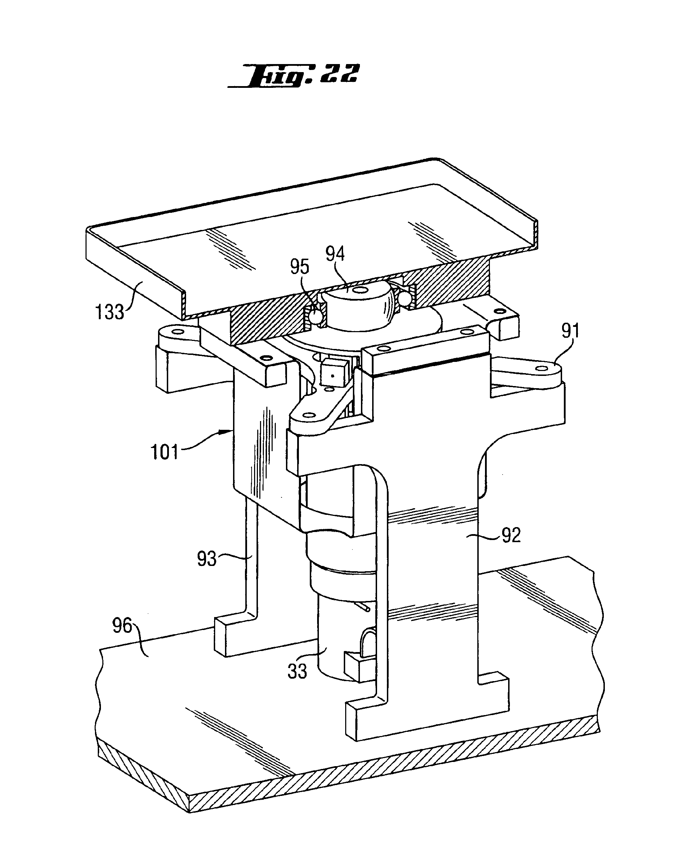

Fig. 22 illustrates the use of a shaker device of the type described above with reference to Figures 15-17 in an analyzer in which a tray 133 is used as carrier of liquid containers that have to be agitated during some time intervals. Figure shows a variant of the embodiment shown by Fig. 22, wherein instead of a single-piece flexible element 101 a flexible structure of the type described above with reference to Fig. 18 is used.

Although preferred embodiments of the invention have been described using specific terms, such description is for illustrative purposes only, and it is to be understood that changes and variations may be made without departing from the scope of the following claims.

## Claims

1. A rack (11) for holding containers containing liquids, said rack comprising
(a) a frame (12) having two or more sections, each section (13, 14) being adapted for receiving a liquid containing component (16),
at least one of the sections (13) of said frame (12) being adapted for receiving a first liquid containing component which is adapted for being removably but tightly mechanically connected to said frame,
(b) at least one movable part (21) adapted to be removably coupled to a movable part (34, 63) of a shaker device, said at least one movable part (21) movable part being adapted for receiving and holding a second liquid containing component (16),
at least one of the sections (14) of said frame being adapted for receiving said at least one movable part (21) and allowing motion of said the entire at least one movable part (21) within predetermined limits.

2. A rack according to claim 1, wherein said at least one movable part (21) is adapted for being positioned within a section (14) of said frame (12), the latter section (14) having a shape and a size that allows movement of the entire at least one movable part (21) within predetermined limits in three directions (X, Y, Z) which are orthogonal to each other.

3. A rack according to claim 1, wherein the entire at least one movable part (21) and said second liquid containing component are adapted to be subject to a combined motion comprising an axial displacement along a first axis within predetermined limits and a oscillation around a second axis within predetermined angular limits, said first axis and said second axis being parallel to each other.

4. An automatic analyzer for analyzing biological samples, said analyzer comprising
(a) a rack (11) according to any of claims 1 to 3, and
(b) an electromechanical shaker device (31) for shaking the entire at least one movable part (21) of said rack (11), said shaker device (31) and the at least one movable part (21) being adapted to be removably connected with each other.

5. An automatic analyzer according to claim 4, wherein said electromechanical shaker device (31) comprises a movable carriage (34), and wherein said at least one movable part (21) is adapted to be removably connected to said movable carriage (34).

6. An automatic analyzer according to claim 4, wherein said shaker device (31) comprises
(a) an eccentric pin (36) driven by a motor (33), and
(b) mechanical means (37, 38, 34) which are connected to said pin (36) and which are connectable to said at least one movable part (21) for moving said movable part (21) when said eccentric pin (36) is rotated by said motor.

7. An automatic analyzer according to claim 6, wherein the entire at least one movable part (21) is subject to a combined motion in three directions (X, Y, Z) which are orthogonal to each other when said pin (36) is rotated by said motor.

8. An automatic analyzer according to claim 6, wherein the entire at least one movable part (21) is subject to a combine motion comprising an axial displacement along an axis (39) within predetermined limits and a oscillation about said axis (39) within predetermined angular limits when said eccentric pin (36) is rotated by said motor (33).

9. An automatic analyzer according to claim 5, wherein said movable carriage (34) is connected to a first stationary part (92) and to a second stationary part (93) of the analyzer by means of a flexible element (101), said first and second stationary parts (92, 93) being rigid parts which are arranged on opposite sides of said movable carriage (34), the connection of said movable carriage (34) to said rigid stationary parts (92, 93) allowing limited displacements of said movable carriage (34) in three directions (X, Y, Z) which are orthogonal to each other.

10. An automatic analyzer according to claim 9, wherein said flexible element (101) is a single-piece element which comprises
a flat central part (106) lying in a first plane,
a first pair of rectangular flaps (102, 103) parallel to each other, each of said flaps extending from said flat central part (106) along a plane normal to said first plane and ending in and end part (111, 112), said end parts (111, 112) of said flaps (102, 103) of said first pair of flaps being connected to opposite end parts (113, 114) of said movable carriage (34), and
a second pair of rectangular flaps (104, 105) parallel to each other, each of said flaps extending from said central part (106) along a plane normal to said first plane and ending in and end part, said end part (115) of one of the latter flaps (104) being connected to said second stationary part (93), and said end part (116) of the other flap (105) of said second pair of flaps (104, 105) being connected to said first stationary part (92),
said flaps (104, 105) of the second pair of flaps extending along planes which are normal to said flaps (102, 103) of said first pair of flaps.

11. An automatic analyzer according to claim 9, wherein said flexible element (101) comprises
a central plate (107) lying in a first plane,
a first pair of rectangular flaps (102, 103) parallel to each other and extending along planes normal to said first plane, each of said flaps (102, 103) having first end part connected to said central plate (107) and second end part (111, 112) opposite to the first and connected to said movable carriage (34), the latter end parts (111, 112) of said first pair of flaps being connected to opposite end parts (113, 114) of said movable carriage (34), and
a second pair of rectangular flaps (104, 105) parallel to each other and extending along planes normal to said first plane, one of said flaps (104) having a first end part (117) connected to said central plate (107) and a second end part (115) connected to a stationary part (125) of the analyzer at a place located on one side of said movable carriage (34), and the other one of said flaps (105) having a first end part (118) connected to said central plate (107) and a second end part (116) connected to said stationary part (125)) of the analyzer at a place located on the opposite side of said movable carriage (34),
said flaps (104, 105) of the second pair of flaps extending along planes which are normal to said flaps (102, 103) of said first pair of flaps.

## Patentansprüche

1. Gestell (11) zum Halten von Flüssigkeit enthaltenden Behältern, wobei das Gestell Folgendes umfasst:
(a) einen Rahmen (12) mit zwei oder mehreren Abschnitten, wobei jeder Abschnitt (13, 14) ausgelegt ist, eine Flüssigkeit enthaltende Komponente (16) aufzunehmen,
wobei mindestens einer der Abschnitte (13) des Rahmens (12) ausgelegt ist, eine erste Flüssigkeit enthaltende Komponente aufzunehmen, die ausgelegt ist, abnehmbar, aber fest mit dem Rahmen mechanisch verbunden zu sein,
(b) mindestens einen beweglichen Teil (21), der ausgelegt ist, abnehmbar an den beweglichen Teil (34, 63) einer Schüttelvorrichtung gekoppelt zu sein, wobei der mindestens eine bewegliche Teil (21) ausgelegt ist, eine zweite Flüssigkeit enthaltende Komponente (16) aufzunehmen und zu halten,
wobei mindestens einer der Abschnitte (14) des Rahmens ausgelegt ist, mindestens einen beweglichen Teil (21) aufzunehmen und die Bewegung des gesamten mindestens einen beweglichen Teils (21) innerhalb vorgegebener Grenzen zu ermöglichen.

2. Gestell nach Anspruch 1, wobei mindestens ein beweglicher Teil (21) ausgelegt ist, innerhalb eines Abschnitts (14) des Rahmens (12) positioniert zu werden, wobei der letztere Abschnitt (14) eine Form und eine Größe aufweist, die die Bewegung des gesamten mindestens einen beweglichen Teils (21) innerhalb vorgegebener Grenzen in drei Richtungen (X, Y, Z), die senkrecht zueinander sind, ermöglichen.

3. Gestell nach Anspruch 1, wobei das gesamte mindestens eine bewegliche Teil (21) und die zweite Flüssigkeit enthaltende Komponente ausgelegt sind, einer kombinierten Bewegung, die eine axiale Verschiebung entlang der ersten Richtung innerhalb vorgegebener Grenzen und eine Oszillation um eine zweite Achse innerhalb vorgegebener Winkelgrenzen umfasst, ausgesetzt zu werden, wobei die erste Achse und die zweite Achse parallel zueinander sind.

4. Automatischer Analysator zur Analyse von biologischen Proben, wobei der Analysator Folgendes umfasst:
(a) ein Gestell (11) nach einem der Ansprüche 1 bis 3 und
(b) eine elektromechanische Rüttelvorrichtung (31) zum Rütteln des gesamten mindestens einen beweglichen Teils (21) des Gestells (11), wobei die Rüttelvorrichtung (31) und der mindestens eine bewegliche Teil (21) ausgelegt sind, miteinander abnehmbar verbunden zu sein.

5. Automatischer Analysator nach Anspruch 4, wobei die elektromechanische Rüttelvorrichtung (31) einen beweglichen Wagen (34) umfasst und wobei der mindestens eine bewegliche Teil (21) ausgelegt ist, abnehmbar mit dem beweglichen Wagen (34) verbunden zu sein.

6. Automatischer Analysator nach Anspruch 4, wobei die Rüttelvorrichtung (31) Folgendes umfasst:
(a) einen exzentrischen Stift (36), der durch einen Motor (33) angetrieben wird und
(b) mechanische Mittel (37, 38, 34), die mit dem Stift (36) verbunden sind und die mit dem mindestens einen beweglichen Teil (21) verbindbar sind, um das bewegliche Teil (21) zu bewegen, wenn der exzentrische Stift (36) durch den Motor gedreht wird.

7. Automatischer Analysator nach Anspruch 6, wobei das gesamte und mindestens eine bewegliche Teil (21) einer kombinierten Bewegung in drei Richtungen (X, Y, Z), die zueinander senkrecht sind, ausgesetzt wird, wenn der Stift (36) durch den Motor gedreht wird.

8. Automatischer Analysator nach Anspruch 6, wobei der gesamte mindestens eine bewegliche Teil (21) einer kombinierten Bewegung, die eine axiale Verschiebung entlang einer Achse (39) innerhalb vorgegebener Grenzen und eine Oszillation um die Achse (39) innerhalb vorgegebener Winkelgrenzen umfasst, ausgesetzt wird, wenn der exzentrische Stift (36) durch den Motor (33) gedreht wird.

9. Automatischer Analysator nach Anspruch 5, wobei der bewegliche Wagen (34) mit einem ersten stationären Teil (92) und einem zweiten stationären Teil (93) des Analysators mit Hilfe eines flexiblen Elements (101) verbunden ist, wobei der erste und der zweite stationäre Teil (92, 93) steife Teile sind, die auf gegenüberliegenden Seiten des beweglichen Wagens (34) angeordnet sind, wobei die Verbindung des beweglichen Wagens (34) mit den steifen stationären Teilen (92, 93) eine begrenzte Bewegung des beweglichen Wagens (34) in drei Richtungen (X, Y, Z), die senkrecht zueinander sind, ermöglicht.

10. Automatischer Analysator nach Anspruch 9, wobei das flexible Element (101) ein einteiliges Element ist, das Folgendes umfasst:
einen flachen Mittelteil (106), der in einer ersten Ebene liegt,
ein erstes Paar rechteckiger Klappen (102, 103), die parallel zueinander sind, wobei sich jede Klappe von dem flachen Mittelteil (106) entlang einer zu der ersten Ebene senkrechten Ebene und in einem Endstück (111, 112) endend erstreckt, wobei die Endstücke (111, 112) der Klappen (102, 103) des ersten Paars Klappen mit gegenüberliegenden Endstücken (113, 114) des beweglichen Wagens (34) verbunden sind, und
ein zweites Paar rechteckiger Klappen (104, 105), die parallel zueinander sind, wobei sich jede Klappe von dem Mittelteil (106) entlang einer zu der ersten Ebene senkrechten Ebene und in einem Endstück endend erstreckt, wobei das Endstück (115) einer der letzteren Klappen (104) mit dem zweiten stationären Teil (93) verbunden ist und das Endstück (116) der anderen Klappe (105) des zweiten Paars Klappen (104, 105) mit dem ersten stationären Teil (92) verbunden ist,
wobei sich die Klappen (104, 105) des zweiten Paars Klappen entlang Ebenen erstrecken, die senkrecht zu den Klappen (102, 103) des ersten Paars Klappen ist.

11. Automatischer Analysator nach Anspruch 9, wobei das flexible Element (101) Folgendes umfasst:
eine Mittelplatte (107), die in einer ersten Ebene liegt,
ein erstes Paar rechteckiger Klappen (102, 103), die parallel zueinander sind und sich entlang zu der ersten Ebene senkrechter Ebenen erstrecken, wobei jede der Klappen (102, 103) ein erstes Endstück, das mit der Mittelplatte (107) verbunden ist, und ein zweites Endstück (111, 112), das dem ersten gegenüberliegt und mit dem beweglichen Wagen (34) verbunden ist, besitzt, wobei die letzteren Endstücke (111, 112) des ersten Paars Klappen mit gegenüberliegenden Endstücken (113, 114) des beweglichen Wagens (34) verbunden sind, und
ein zweites Paar rechteckiger Klappen (104, 105), die parallel zueinander sind und sich entlang zu der ersten Ebene senkrechter Ebenen erstrecken, wobei eine der Klappen (104) ein erstes Endstück (117), das mit der Mittelplatte (107) verbunden ist, und ein zweites Endstück (115), das mit einem stationären Teil (125) des Analysators an einem Ort, der sich auf einer Seite des beweglichen Wagens (34) befindet, verbunden ist, besitzt und die andere der Klappen (105) ein erstes Endstück (118), das mit der Mittelplatte (107) verbunden ist, und ein zweites Endstück (116), das mit dem stationären Teil (125) des Analysators an einem Ort, der sich auf der gegenüberliegenden Seite des beweglichen Wagens (34) befindet, verbunden ist, besitzt,
wobei sich die Klappen (104, 105) des zweiten Paars Klappen (102, 103) entlang Ebenen erstrecken, die senkrecht zu den Klappen (102, 103) des ersten Paars Klappen ist.

## Revendications

1. Râtelier (11) pour maintenir des récipients contenant des liquides, ledit râtelier comprenant
(a) un cadre (12) ayant deux sections ou plus, chaque section (13, 14) étant adaptée à recevoir un composant (16) contenant un liquide,
au moins une parmi les sections (13) dudit cadre (12) étant adaptée à recevoir un premier composant contenant un liquide qui est adapté à être mécaniquement connecté de façon amovible mais ferme audit cadre,
(b) au moins une partie mobile (21) adaptée à être couplée de façon amovible à une partie mobile (34, 63) d'un dispositif agitateur, ladite au moins une partie mobile (21) étant adaptée à recevoir et à maintenir un deuxième composant (16) contenant un liquide,
au moins une parmi les sections (14) dudit cadre étant adaptée à recevoir ladite au moins une partie mobile (21) et à permettre un mouvement de la totalité de ladite au moins une partie mobile (21) à l'intérieur de limites prédéterminées.

2. Râtelier selon la revendication 1, dans lequel ladite au moins une partie mobile (21) est adaptée à être positionnée à l'intérieur d'une section (14) dudit cadre (12), cette dernière section (14) ayant une forme et une taille qui permettent un mouvement de la totalité de ladite au moins une partie mobile (21) à l'intérieur de limites prédéterminées dans trois directions (X, Y, Z) qui sont orthogonales les unes aux autres.

3. Râtelier selon la revendication 1, dans lequel la totalité de ladite au moins une partie mobile (21) et ledit deuxième composant contenant un liquide sont adaptés à être soumis à un mouvement combiné comprenant un déplacement axial le long d'un premier axe à l'intérieur de limites prédéterminées et une oscillation autour d'un deuxième axe à l'intérieur de limites angulaires prédéterminées, ledit premier axe et ledit deuxième axe étant parallèles l'un à l'autre.

4. Analyseur automatique pour analyser des échantillons biologiques, ledit analyseur comprenant
(a) un râtelier (11) selon l'une quelconque des revendications 1 à 3, et
(b) un dispositif agitateur (31) électromécanique pour agiter la totalité de ladite au moins une partie mobile (21) dudit râtelier (11), ledit dispositif agitateur (31) et l'au moins une partie mobile (21) étant adaptés à être connectés de façon amovible l'un avec l'autre.

5. Analyseur automatique selon la revendication 4, dans lequel ledit dispositif agitateur (31) électromécanique comprend un chariot mobile (34), et dans lequel ladite au moins une partie mobile (21) est adaptée à être connectée de façon amovible audit chariot mobile (34).

6. Analyseur automatique selon la revendication 4, dans lequel ledit dispositif agitateur (31) comprend
(a) une goupille (36) excentrique entraînée par un moteur (33), et
(b) des moyens mécaniques (37, 38, 34) qui sont connectés à ladite goupille (36) et qui sont connectables à ladite au moins une partie mobile (21) pour déplacer ladite partie mobile (21) lorsque ladite goupille (36) excentrique est tournée par ledit moteur.

7. Analyseur automatique selon la revendication 6, dans lequel la totalité de ladite au moins une partie mobile (21) est soumise à un mouvement combiné dans trois directions (X, Y, Z) qui sont orthogonales les unes aux autres lorsque ladite goupille (36) est tournée par ledit moteur.

8. Analyseur automatique selon la revendication 6, dans lequel la totalité de ladite au moins une partie mobile (21) est soumise à un mouvement combiné comprenant un déplacement axial le long d'un axe (39) à l'intérieur de limites prédéterminées et une oscillation autour dudit axe (39) à l'intérieur de limites angulaires prédéterminées lorsque ladite goupille (36) excentrique est tournée par ledit moteur (33).

9. Analyseur automatique selon la revendication 5, dans lequel ledit chariot mobile (34) est connecté à une première partie fixe (92) et à une deuxième partie fixe (93) de l'analyseur au moyen d'un élément flexible (101), lesdites première et deuxième parties fixes (92, 93) étant des parties rigides qui sont agencées sur des côtés opposés dudit chariot mobile (34), la connexion dudit chariot mobile (34) auxdites parties fixes (92, 93) rigides permettant des déplacements limités dudit chariot mobile (34) dans trois directions (X, Y, Z) qui sont orthogonales les unes aux autres.

10. Analyseur automatique selon la revendication 9, dans lequel ledit élément flexible (101) est un élément en une seule pièce qui comprend
une partie centrale (106) plate reposant dans un premier plan,
une première paire de volets (102, 103) rectangulaires parallèles l'un à l'autre, chacun desdits volets s'étendant à partir de ladite partie centrale (106) plate le long d'un plan normal audit premier plan et aboutissant dans une partie d'extrémité (111, 112), lesdites parties d'extrémité (111, 112) desdits volets (102, 103) de ladite première paire de volets étant connectées à des parties d'extrémité (113, 114) opposées dudit chariot mobile (34), et
une deuxième paire de volets (104, 105) rectangulaires parallèles l'un à l'autre, chacun desdits volets s'étendant à partir de ladite partie centrale (106) le long d'un plan normal audit premier plan et aboutissant dans une partie d'extrémité, ladite partie d'extrémité (115) d'un parmi ces derniers volets (104) étant connectée à ladite deuxième partie fixe (93), et ladite partie d'extrémité (116) de l'autre volet (105) de ladite deuxième paire de volets (104, 105) étant connectée à ladite première partie fixe (92), lesdits volets (104, 105) de la deuxième paire de volets s'étendant le long de plans qui sont normaux auxdits volets (102, 103) de ladite première paire de volets.

11. Analyseur automatique selon la revendication 9, dans lequel ledit élément flexible (101) comprend
une plaque centrale (107) reposant dans un premier plan,
une première paire de volets (102, 103) rectangulaires parallèles l'un à l'autre et s'étendant le long de plans normaux audit premier plan, chacun desdits volets (102, 103) ayant une première partie d'extrémité connectée à ladite plaque centrale (107) et une deuxième partie d'extrémité (111, 112) opposée à la première et connectée audit chariot mobile (34), ces dernières parties d'extrémité (111, 112) de ladite première paire de volets étant connectées à des parties d'extrémité (113, 114) opposées dudit chariot mobile (34), et
une deuxième paire de volets (104, 105) rectangulaires parallèles l'un à l'autre, et s'étendant le long de plans normaux audit premier plan, un desdits volets (104) ayant une première partie d'extrémité (117) connectée à ladite plaque centrale (107) et une deuxième partie d'extrémité (115) connectée à une partie fixe (125) de l'analyseur en un emplacement situé sur un côté dudit chariot mobile (34), et l'autre desdits volets (105) ayant une première partie d'extrémité (118) connectée à ladite plaque centrale (107) et une deuxième partie d'extrémité (116) connectée à ladite partie fixe (125) de l'analyseur en un emplacement situé sur le côté opposé dudit chariot mobile (34),
lesdits volets (104, 105) de la deuxième paire de volets s'étendant le long de plans qui sont normaux auxdits volets (102, 103) de ladite première paire de volets.
